# EUROPEAN PATENT SPECIFICATION

(11) **EP 1 194 824 B1**
(45) Date of publication and mention of the grant of the patent: **07.09.2005**
(21) Application number: 00931879.1
(22) Date of filing: 23.05.2000
(51) Int. Cl.: G05D 11/00, B60R 21/34, B62D 25/10

(54) **Collapsible Hood Hinge**
Zusammenklappbares Scharnier einer Motorhaube
Charnière déformable d'un capot

(30) Priority: 25.05.1999 SE 9901868
(43) Date of publication of application: 10.04.2002
(73) Proprietor: Volvo Personvagnar AB, 405 31 Göteborg (SE)
(72) Inventor: BJUREBLAD, Mats, S-442 41 Kungälv (SE); WEIMAN, Martin, S-414 82 Göteborg (SE)
(74) Representative: Hammond, Andrew David
(86) International application number: PCT/SE2000/001032
(87) International publication number: WO 2000/072101

(56) References cited:
- DE-A1- 19 712 961
- US-A- 3 643 755

## Description

The present invention relates to a hinge arrangement for passenger car hoods, which arrangement intends to decrease the injuries on pedestrians which are run into, whereby the hood is of the type, which is pivotable about two hinges applied at the rear end of the hood, and whereby the hood is arranged to yieldingly absorb impacts in the vertical direction.

A great number of the people who are injured or killed in traffic are unprotected pedestrians, which are run into by passenger cars. In a collision between the front of a passenger car and a pedestrian, a common consequence is that the pedestrian falls over the hood, and the pedestrian's head collides with the hood vertically from above with high kinetic energy. Investigations have indicated that head of a grown person probably collides against the hood, principally in the rear half, while children collide with their heads against the front half. It is known to design hoods yieldingly to protect pedestrians, and to attempt to increase the distance from the hood to underlying hard components over different parts of the hood, i.e. so that a deformation length is obtained, which is sufficient to completely brake the pedestrian's head before it hits any hard components.
An important problem in this context, which so far not has been solved in a satisfactory manner, is the fixing of the two hood hinges in those type of hoods where the hinges are arranged at the rear end of the hood. The risk is comparatively great that an adult pedestrian being run into hits their head at or close to the rear hinge fixings, which in conventional constructions are rigidly connected to the car body and therefore would cause contusions to a head which falls heavily onto the hinge fixing.
One proposed solution is described in German Patent Application DE 19 712 961 A.
According to this proposal there are sensors which detect a collision with a pedestrian, and thereby activate a compressed spring or release an explosive charge, whereby said spring or explosive charge lifts the hood above the hinges to form a compliant deformation length between the hood and the fixed parts in front of the hinges. This construction, with sensor and compression spring or explosive charge, is particularly complicated.
Further the construction according to said German publication has several essential drawbacks. There is a risk, for instance, that the compression spring or explosive charge is released unintentionally, for instance in another type of collision. Upon an unintentional release it is longwinded and time demanding to re-establish the release device. A further drawback is that there is a risk that upon collision, the rear elevated hood is displaced backwards by horizontal forces into the windshield, with accompanying risk for driver and passengers.

In German publication 27 11 339 a device is described in which the hood is lifted up above the rear fixings of the hood, in connection with a collision at which the hood is displaced backwards. Apart from that this publication does not describe a solution for hinges, the construction has a number of drawbacks associated with the fact that the hood must be displaced backwards, in order to lift the hood upwards in the rear. An obvious drawback is that a pedestrian which is run into, may be thrown with his head into the hood at or close to the rear fixings without the hood being previous displaced backwards, which leads to the person's head hitting the hard fixings directly. A further drawback is that there is a major risk for the hood to hit into the windshield if displaced backwards. Passenger car hoods are compliantly shaped to collision impacts from above and are differently bent and accuated at different places aiming to create sufficient deformation space between the hood and the underlying hard components. If the hood is displaced in connection with a collision, there is no control whatsoever whether the deformation spaces under the hood are sufficient.

In European Patent 644 104 B1 a similar solution is described. Here a lifting device is described, being arranged to lift the rear end of the hood when the hood is displaced backwards during a collision.

Although the problem, such as evident from above, has been known for a long time, until now no satisfactory solution has been disclosed.

A simple solution has been achieved through the present invention which completely eliminates the above problem using an arrangement of the type mentioned in the introductory part.

The arrangement according to the invention is characterised in that each hinge is respectively fixed in two rods which are interconnected at the hinges, that one of these rods is a draw rod, being arranged to absorb forces in the longitudinal direction of the hood and essentially prevent its horizontal displacement in connection with a collision between the front of the passenger car and another object, such as a vehicle or a pedestrian, that the second of the rods is a vertical rod, which is arranged to be deformed at a vertical collision impact during absorption of a predetermined vertical load and which rod is shaped to be able to absorb said vertical load through a predetermined deformation length.

It should be observed that the expression "vertical", which is used here in the description and the patent claims, should be given an interpretation that is wider than what is normally related to with this expression. The expression is used to describe that an impact against the hood comes from above. The hoods of different cars have different inclinations in relation to an absolute vertical plane. At a collision between a pedestrian and the front of a passenger car the head of the person will hit the hood in a direction, which relative to the horizontal plane is less than 90° and usually in the region of 50 °.

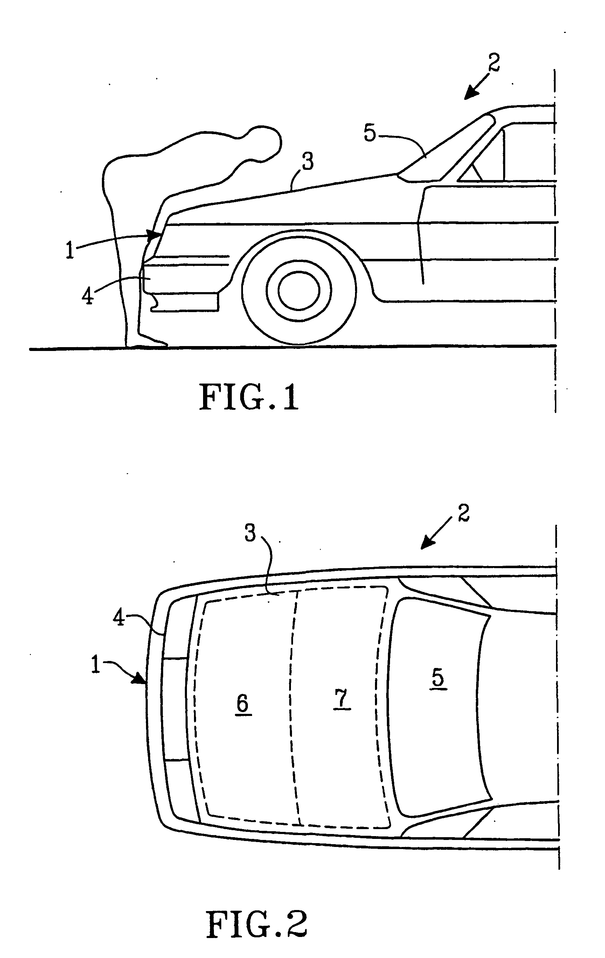

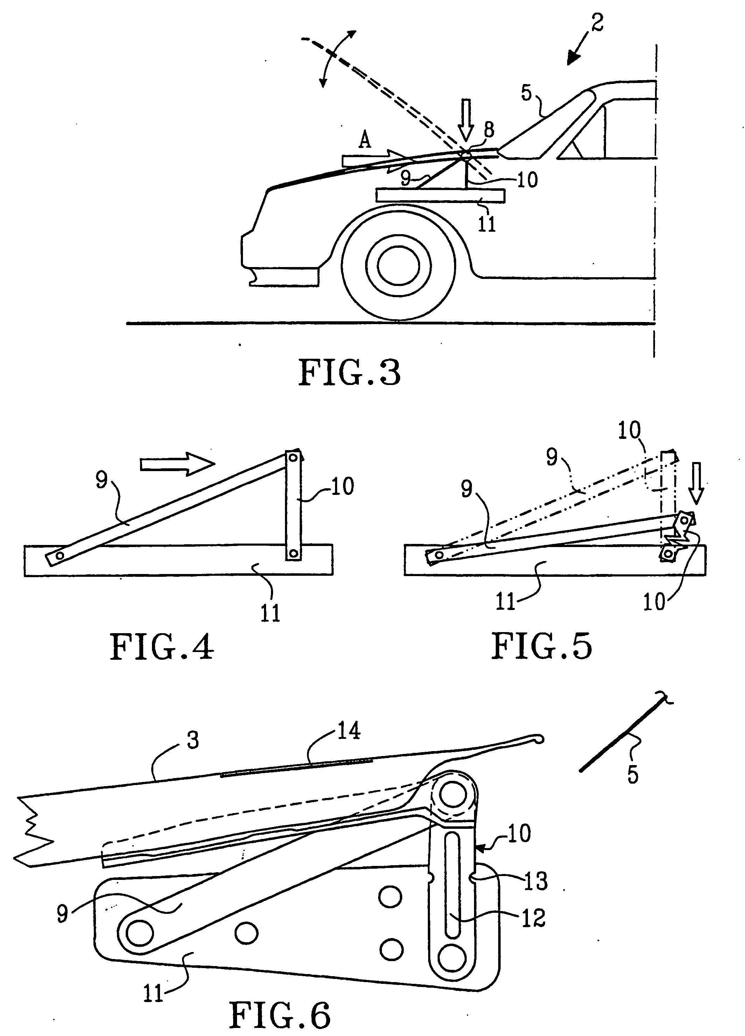

The invention will be described in the following with reference to an embodiment shown in the enclosed drawings, wherein figure 1 schematically shows the front half of a passenger car from the side and upon a collision with a person. Figure 2 shows schematically a plan view of the front half of the car according to figure 1. Figure 3 schematically shows the principle of the solution according to the present invention.
Figure 4 shows the principle of the absorption of horizontal load by the hinge fixings.
Figure 5 shows the hinge fixings according to figure 4 after deformation in connection with a vertical load. Figure 6 shows a side view of an embodiment of a device according to the invention.

Figure 1 shows how a pedestrian, who is run into by the front 1 of a passenger car 2 falls over the hood 3. The forward bumper has, in the drawing, been marked with 4, and the windshield of the vehicle with 5.
The most dangerous injuries for a pedestrian being run into by a passenger car are head injuries, which may arise when the head of the person collides with the hood, at an oblique angle from above, down towards the hood. Where on the hood the person's head hits, depends of course on where at the front part of the vehicle the collision occurs, the construction of the car at the front, as well as the height of the person. Investigations of accidents occurred have shown that the head of a child normally ends up in the schematically marked area 6 shown with dotted lines in figure 2, while the head of a grown ends up more rearwardly, and usually in the schematically marked area 7 shown with dotted lines. The hood itself is constructed so that it is vertically deformed under absorption of a predetermined vertical load, being chosen less than a value at which serious head injuries may be inflicted on a person. Then it is of course necessary that there is enough deformation space under the hood at the areas where there is a high risk that the head of the person being run into ends up. In most passenger cars with hinges applied at the rear part of the hood the hinges of the hood are located in the risk zone where the head of a grown pedestrian may collide.

In figure 3 the different parts of the schematically shown forward half of the car have been provided with the same reference denotations corresponding to details in figures 1 and 2.

The hood 3 is at each side suspended by hinges 8. These are fixed in two rods connected to the hinges, a draw rod 9 and a vertical rod 10. The opposed ends of the rods 9, 10 in relation to the hinges are fixedly mounted to hard supporting body beams, which have been denoted with 11 in figure 3. The draw rods 9 are arranged to receive high horizontal forces A at the hood without the draw rods 9 being deformed. It is important that the draw rod 9 stops the hood from being displaced through the windshield 5. Further the hood is shaped to have sufficient deformation space to underlying hard components and this can be difficult to achieve if a hood, which is normally bent and arcuated, differently in different places, is not fixed in the longitudinal direction. This is true for the hinge fixings, which support the hood at the rear. As evident from the drawing, the hinges are supported in the vertical direction by the vertical rods 10, and if the hood is permitted to be displaced in the horizontal direction there is no control whatsoever of the vertical load at which the vertical rod 10 will be deformed and of the length of the deformation distance between the hinge and underlying hard body components.
The object of the present invention is as mentioned above, to decrease the risk of serious head injuries on pedestrians being run into if the head of the person should end up on or near to the hinge fixings.
The principle of the solution is illustrated in figures 4 and 5. The draw rod 9 and the vertical rod are fixedly connected to a body beam 11. The draw rods 9 should prevent horizontal displacement of the hood and thereby the hinge 8. The vertical rod 10 is arranged to become permanently deformed in its longitudinal direction at absorption of a vertical load of a predetermined size, as shown in figure 5. Permanent deformation means that the vertical rod is plastically deformed. This type of deformation occurs during essentially constant load, which is preferred for reducing the risk of said head injuries. Deformation of the vertical rod shall occur at a low vertical load so that the force against a head falling down towards the hinge fixing does not become so high that there is a risk that the person becomes seriously injured. The size of the predetermined vertical load depends on the available deformation space, i.e. the length of the vertical rod 10 according to the embodiment in figures 4 and 5. The larger available length between the hinge fixing before deformation and the underlying hard body beam, the lesser the value can be chosen of the predetermined vertical load, at which the vertical rod is deformed. The intention is to completely brake the deformation movement and absorb the kinetic energy before the hinge and thereby the person's head hits the hard body beam. Optimal effect is achieved when the vertical rod is arranged to be uniformly deformed and to absorb the predetermined vertical load during the whole deformation length, i.e., the softer and the longer brake length, the less injury will occur to the head of the run-into-pedestrian when it collides into the hood at or near to the hinges. The predetermined vertical load must of course also be adapted to other strength requirements, for instance there should not be any risk for the vertical rod to deform when a person jumps up and sits on the hood in front of a hinge joint.

With a construction according to the present invention it is realistic to decrease the risk for serious head injuries of pedestrians being run into at velocities up to 40 km/h, who after collision bump the head into the hood near or at the hinge fixings. The available deformation length of the vertical rod should be in the order of magnitude of at least 50-100 mm, preferably exceeding 70 mm, and the predetermined vertical load in the order of magnitude 1-5 kN, preferably about 2 kN.

The vertical rod shall be uniformly deformed and absorb the predetermined force evenly along its length. This even load absorption may be achieved in a number of different ways. For example the vertical rod can be provided with embossings along its length, which embossings are shaped to give the vertical rod a plane deformation at a certain predetermined force. This can also be achieved by the vertical rod, having a varying thickness along its length, and/or being provided with cavities in the inside of the vertical rod or the edges thereof.

An embodiment of a hinge fixing is shown in figure 6. The vertical rod 10 is straight and elongated, and provided with a longitudinal cavity 12 and two waist cavities 13. Upon deformation, the vertical rod folds outwards at the cavities 13.
In figure 6 the hood has been marked with 3, a hinted windshield with 5 and the draw rod with 9. Further the head impact area has been marked with 14, which gives rise to deformation of the vertical rod. Any determined extension of this area is of course not available, but depends on the actual case of load at different collisions.

An embodiment of a vertical rod has been described above in the drawing. This may, however, be shaped in many different ways, curved or angled. As has been described above, the essential thing is, that the vertical rod absorbs the same load over of all its deformation length.
For instance, a spring is unsuitable as vertical rod.

The invention is not limited to the embodiment described above, rather, a number of modifications are possible within the scope of the accompanying claims.

## Claims

1. A hinge arrangement for passenger car hoods (3), which arrangement is intended to decrease the injuries on pedestrians, wherein the hood is of the type which is pivotable about two hinges (8) applied at the rear end of the hood, and wherein the hood (3) is arranged to yieldingly absorb impacts in the vertical direction,
**characterised in**
**that** each hinge is respectively fixed in two rods (9,10) interconnected at the hinges (8), that one of these rods is a draw rod (9), being arranged to absorb forces in the longitudinal direction of the hood and essentially prevent its horizontal displacement in connection with a collision between the front (1) of the passenger car and an object, such as another vehicle or a pedestrian, that the second of the rods is a vertical rod (10), which is formed and arranged to become permanently deformed at a vertical collision impact while absorbing a predetermined vertical load over a predetermined deformation length.

2. A device according to claim 1,
**characterised in**
**that** the vertical rod (10) is composed of an elongated element, which is formed to be deformed in its longitudinal direction at said load.

3. A device according to claim 1 or 2,
**characterised in**
**that** the deformation length is in the magnitude of at least 50-100 mm, preferably exceeding 70 mm, and the predetermined vertical load is in the magnitude of 1-5 kN, preferably about 2 kN.

## Patentansprüche

1. Eine Schamieranordnung für Hauben (3) von Passagierfahrzeugen, deren Anordnung dazu vorgesehen ist, die Fußgängern zugefügten Verletzungen zu reduzieren, wobei die Haube von derjenigen Bauart ist, die um zwei Scharniere (8) schwenkbar ist, welche am rückseitigen Ende der Haube angebracht sind, und wobei die Haube (3) ausgebildet ist, Aufschläge in vertikaler Richtung nachgebend zu absorbieren,
**dadurch gekennzeichnet, dass**
jedes Scharnier jeweils in zwei Stäben (9, 10) befestigt ist, die an den Scharnieren (8) verbunden sind, dass einer dieser Stäbe ein Zugstab (9) ist, welcher ausgebildet ist, Kräfte in Längsrichtung der Haube zu absorbieren und im Wesentlichen deren horizontale Verschiebung im Zusammenhang mit einer Kollision zwischen der Vorderseite (1) eines Passagierfahrzeugs und einem Objekt, beispielsweise einem anderen Fahrzeug oder einem Fußgänger, zu verhindern, dass der zweite der Stäbe ein Vertikalstab (10) ist, welcher ausgestaltet und angeordnet ist, um bei einem vertikalen Kollisionsaufprall unter Absorption einer vorbestimmten vertikalen Belastung über eine vorbestimmte Verformungslänge permanent verformt zu werden.

2. Eine Vorrichtung nach Anspruch 1,
**dadurch gekennzeichnet, dass**
der Vertikalstab (10) aus einem langgestreckten Element besteht, welches ausgestaltet ist, um bei der Belastung in seiner Längsrichtung verformt zu werden.

3. Eine Vorrichtung nach Anspruch 1 oder 2,
**dadurch gekennzeichnet, dass**
die Verformungslänge in der Größenordnung von mindestens 50-100 mm liegt, bevorzugt 70 mm überschreitend, und die vorbestimmte vertikale Belastung in der Größenordnung von 1-5 kN, bevorzugt etwa 2 kN, liegt.

## Revendications

1. Système de charnière pour capots (3) de voiture particulière, ce système étant destiné à diminuer les blessures infligées à des piétons, dans lequel le capot est du type pivotant autour de deux charnières (8) placées sur l'extrémité arrière du capot, et dans lequel le capot (3) est prévu pour absorber élastiquement les chocs dans la direction verticale,
***caractérisé en ce que*** chaque charnière est respectivement fixée dans deux tringles (9, 10) interconnectées par les charnières (8), ***en ce qu*****'**une de ces tringles est une tringle de traction (9) prévue pour absorber des forces dans la direction longitudinale du capot et essentiellement prévenir son déplacement horizontal en liaison avec une collision entre l'avant (1) de la voiture particulière et un objet tel qu'un autre véhicule ou un piéton, ***en ce que*** la deuxième des tringles est une tringle verticale (10) qui est formée et prévue pour se déformer de manière permanente lors d'un choc de collision vertical tout en absorbant une charge verticale prédéterminée sur une longueur de déformation prédéterminée.

2. Dispositif selon la revendication 1, ***caractérisé en ce que*** la tringle verticale (10) est composée d'un élément allongé qui est formé pour se déformer dans sa direction longitudinale sous ladite charge.

3. Dispositif selon la revendication 1 ou 2, ***caractérisé en ce que*** la longueur de la déformation est d'un ordre de grandeur d'au moins 50 à 100 mm, de manière précédée supérieure à 70 mm, et la charge verticale prédéterminée est d'un ordre de grandeur de 1 à 5 kN, de manière préférée environ 2 kN.
